# EUROPEAN PATENT SPECIFICATION

(11) **EP 4 158 258 B1**
(45) Date of publication and mention of the grant of the patent: **27.08.2025**
(21) Application number: 21730300.7
(22) Date of filing: 28.05.2021
(51) Int. Cl.: F24F 13/02, F24F 13/068, F24F 13/10, F24F 11/75, F24F 12/00

(54) **VENTILATION SYSTEM**
LÜFTUNGSSYSTEM
SYSTÈME DE VENTILATION

(30) Priority: 29.05.2020 NL 2025707; 25.11.2020 NL 2026981
(43) Date of publication of application: 05.04.2023
(73) Proprietor: Goflow Technology IP B.V., 2171 TR Sassenheim (NL)
(72) Inventor: VROEGE, Norbert Peter, 2242 EB Wassenaar (NL)
(74) Representative: Nederlandsch Octrooibureau
(86) International application number: PCT/NL2021/050343
(87) International publication number: WO 2021/242107

(56) References cited:
- EP-A1- 1 647 995
- EP-A2- 0 511 736
- EP-A2- 0 621 451
- WO-A1-99/05372
- NL-C2- 1 024 465
- US-A- 4 874 127
- US-A- 5 144 781
- US-A1- 2003 066 258
- US-A1- 2005 159 099
- US-A1- 2012 115 409

## Description

### Field of the invention

The present invention relates to a ventilation system for ventilating rooms. Further, the invention relates to a method of installing such a ventilation system.

### Background art

EP2017539 describes a known ventilation system for ventilating especially classrooms and similar rooms, comprising a lowered ceiling and means, e.g. a ventilator, for forced air inlet from the outside air into the room above the lowered ceiling, and air outlet openings mainly evenly spaced over the whole surface of the lowered ceiling. The exhaust air may be led via an HR unit to preheat the supply air. Blowing the supply air along the underside of the concrete upper floor enables cooling that floor at night. By day this cold may be used to cool the supply air. The system uses the whole ceiling surface to supply air to the room instead of blowing air concentratedly via windows or grids in the façade or ceilings. Via a pattern of air outlet openings in the (lowered) ceiling the air is blown into the room. By convection the air blown in will be mixed with the room air and thus the possible temperature difference will be equalized before the air comes into the living zone (height of about < 1.80 m). This system and comparable systems are commonly also used in other rooms such as waiting and treatment rooms at medical facilities, offices and shops.

US2005/0159099 discloses an airflow distribution control system for use in a raised floor datacenter, comprising under-floor partitions with adjustable apertures that alter the air resistance in the under-floor plenum beneath the raised floor. A sensor is coupled to a servomotor of the adjustable apertures to open and close these apertures in response to the sensor signal, thereby controlling flow resistance of the partition. Air that is exited underneath the floor from a Computer-Room Air Conditioning unit (CRAC) has high velocity near the point of entry and low velocity at larger distances from the CRAC units. This results in an undesirable airflow condition through the perforated tiles, which is overcome by use of the adjustable partitions.

NL 1 024 465 discloses a ventilation system for ventilating a room, comprising:a raised flooring, the raised flooring being air permeable over a floor surface area, and an air supply connected with an air supply inlet to the floor space, the system furthermore comprises a lowered ceiling and an air outlet connected to the ceiling space for exiting air from the ceiling space, the lowered ceiling having a ceiling surface area that is air permeable; the permeable floor surface area being opposite to the air permeable ceiling surface area.

When breathing, people and animals exhale small droplets, which form aerosols. Studies have shown that viruses, bacteria and other contamination bind to these aerosols. The lower the refreshing rate of the air inside a room, the higher the buildup of aerosols containing germs and viruses. Although the known ventilation system provides some degree of refreshed air inside the room, the mixing of air inside the room due to the ventilation system and the movement of people and/or animals causes the aerosols being spread throughout the room, allowing diseases spreading between occupants of the same room. As a result, persons with a lowered immune response or compromised immune system are facing an increased risk of becoming ill when using these spaces with other persons. This is especially problematic during, for example, flu season or pandemics such as COVID-19. A hypothesis being adopted by an increasing number of specialists around the world names the following four risk factors for a person contracting a disease indoor:
- the duration a person is within a room
- the type of pathogen
- the concentration of the pathogen, and
- the amount of circulation within the room.

The present invention seeks to provide a ventilation system which reduces the risk of germs and viruses spreading between persons occupying the same room.

The present invention further seeks to provide a ventilation system which is reasonably cheap and easy to install, even in existing buildings.

### Summary of the invention

Hereto, according to the invention, a ventilation system is provided for ventilating a room, comprising: a lowered ceiling, defining a ceiling space which, when installed, is between the lowered ceiling and a ceiling of the room, the lowered ceiling having a ceiling surface area that is air permeable; a raised flooring, being supported by a support frame, defining a floor space which, when installed, is between the raised flooring and a floor of the room, the raised flooring being air permeable over a floor surface area that is opposite to the air permeable ceiling surface area; an air supply connected with an air supply inlet to the floor space for supplying air into the floor space; and an air outlet, connected to the ceiling space for exiting air from the ceiling space, wherein the air permeability of the raised flooring varies in dependence on distance from the air supply inlet for forming a substantial vertical air flow in which air entering the room through the floor surface area displaces air in the room in the vertical direction and forces air out through the ceiling surface area.

Through varying the air permeability of the raised flooring in dependence on distance from the air supply inlet, the air entering the room through the raised flooring has substantially the same flow rate over the whole floor surface area substantially the same volume and flow speed, causing a vertical laminar flow of fresh air entering the room via the floor. The directly opposite permeable ceiling surface area allows the vertical laminar flow of fresh air being maintained substantially vertical and laminar over the entire height of the room between the raised flooring and lowered ceiling, since the air which is already present in the room may be forced out vertically through the lowered ceiling surface area by the incoming air flow. As a result, mixing of air inside the room caused by the ventilation system is prevented, thereby reducing the risk of germs and viruses spreading between persons occupying the same room. Thus through reducing turbulence inside the room, the risk of diseases being transmitted between occupants of the room is reduced.

The air supply may be set to any desired amount of ventilation, a resulting air flow rate through the raised flooring together with the height of the room determining the air refreshing time for the room, i.e. the time in which all air inside the room is replaced by fresh air. The lower the refreshing time, the lower amount of aerosols building up inside the room, further reducing the risk of diseases spreading between persons inside the room. At least in the Netherlands, the maximum allowable air flow speed for ventilation inside rooms is 0.2 m/s, conforming to NEN 1087 2012. Air flow speeds below this maximum allowable speed are generally not noticeable by occupants of the room. Through the vertical laminar flow, the air can be viewed in horizontal layers moving through the room and removing aerosols constantly. Germs and viruses encapsulated in these aerosols are thereby limited in building up inside the air of the room. Thus even if one or more persons are inside the room for a longer period of time, the amount of aerosols cannot significantly increase with the use of the ventilation system according to the invention and their risk of contracting an airborne disease is no longer significantly affected by the amount of time spent inside that room.

The term "room" may be any room inside a building, including, but not limited to a classroom, a waiting room, a treatment room, a theatre, an office space or a shop.

In an embodiment, the raised flooring comprises a plurality of floor tiles with through-holes, wherein the number of through-holes per cm² and/or size of the through-holes is adapted as a function of the distance from the air supply inlet. The use of floor tiles makes the raised flooring easy to install, also in existing rooms. The tiles can be manufactured at constant outer dimensions. This makes them easy to handle. Also, repair/maintenance to the floor and raised flooring is made easier through the use of tiles, as single tiles can be removed for access to the floor space and replaced if damaged. Standard tile sizes may have widths and lengths ranging for example between 0.3 m and 1.2 m.

The flooring needs to be adapted for allowing air passing there through at substantially the same volume and speed, since the air pressure in the space between the floor and the raised flooring normally drops exponentially with increasing distance from the air inlet. For example, floor tiles positioned further away from the air inlet have more through-holes and/or larger through-holes than floor tiles positioned closer to the air inlet. This causes the permeability of the raised flooring to increase with increasing distance from the inlet, such that despite the lower air pressure at increased distance from the air supply inlet the flow rate through the floor surface area is substantially constant over the whole surface area. Thus each floor tile has a predetermined air permeability, which is equal for floor tiles at approximately the same distance from the air inlet, while the permeability of floor tiles further away from the air inlet is higher than the permeability of floor tiles closer thereto. The variation in air permeability of the floor tiles compensates for the pressure drop of the air from the air inlet, such that the vertical laminar flow from the raised flooring is achieved.

The size of the holes may be fixed for each tile, requiring a range of tiles being used, each tile within the range having a different hole size or amount of holes. The hole size may range, for example, between 1mm and 15mm and the amount of holes may, for example, range between 0.01/cm² and 200/cm². Tiles from the range of tiles are chosen and laid in a predetermined pattern, depending on the capacity of the air supply, the size of the room and the desired air renewal rate.

In an embodiment, each floor tile is provided with a moveable blocking member that is displaceable along a surface area of the tile for at least partly blocking off the through-holes. This allows the same design floor tile being used for the entire raised flooring as the moveable blocking member can be used to adjusts the size of the through-holes in each tile in dependence of the distance of the tile from the air supply inlet. Each floor tile can be adjusted individually to achieve the desired flow of air there through. When each tiles is provided with a pattern of through-holes of constant size and pitch, the air flow distribution over the floor surface area varies in discrete steps corresponding to the size of the tiles. Considering that the maximum allowable air flow speed inside rooms is 0.2 m/s, the difference in flow speed of the vertical laminar flow through adjacent tiles is insufficient to cause turbulence there between. Thus the discrete steps in the air permeability of the raised flooring do not result in mixing of the air flows within the room and the reduced spreading of aerosols is maintained.

The moveable blocking member may be moveable by a manual actuator attached to each individual floor tile for adjusting the through-holes to a predetermined size during placement or for example maintenance.

Alternatively, in an embodiment, each floor tile further comprises a pressure sensor for sensing an air flow pressure through the floor tile and an electric actuator arranged for displacing the blocking member along the surface area of the tile, and wherein the ventilation system further comprises a controller which is with an input connected to each sensor, for receiving a measured pressure value, and adapted for determining an air pressure distribution over the surface of the flooring surface area, and which controller is with an output connected to each electric actuator, and adapted for operating each electric actuator to displace the blocking member adjusting the size of the through-holes of a respective floor tile in dependence of the received pressure value of the respective floor tile and the calculated pressure distribution. Through the implementation of the electric actuator, sensor and controller, the individual floor tiles are adjusted automatically. Rather than having to calculate the required size of the through-holes of each tile and manually placing and/or adjusting each tile accordingly, the controller displaces the blocking members of all floor tiles individually until the air flow through each floor tile is substantially equal over the entire floor surface area. Thus no extensive analysis of the room is required prior to installation of the floor. Rather, the floor automatically adjusts itself during use. Especially for larger rooms (for example more than 10 tiles) this is a cheaper solution, as the electronic system outweighs the costs of analysis and manual fine-tuning of each floor tile during installation. Furthermore, the floor is adjustable to account, for example, for a change in the desired renewal rate, without requiring physical interference with the raised floor.

The electric actuator may for example be a rack and pinion drive, driven by a stepper motor. Advantageously, the stepper motor provides a series of predefined settings, such that the positions of the lower plate with respect to the upper plate are easily and reliably obtained and maintained.

In an embodiment, each floor tile is provided with upper through-openings of a first diameter in a predefined pattern and wherein the blocking member is provided with lower through-openings in a predefined pattern matching the predefined pattern of the upper through-openings, each lower through-opening having a second diameter which is larger than the first diameter or being slot-shaped, having a length which is larger than the first diameter and a width at least equal to the first diameter, the upper and lower through-openings forming the through-holes of the floor tile. The size of the individual through-openings can be larger than the size of their combined through-hole. Advantageously, this prevents the through-openings from collecting dirt and dust as much as preformed through-holes of the same (small) size may.

Alternatively to using actuators to obtain an automatically adjusting flooring, in an embodiment each of the through-holes in each floor tile is provided with a logarithmic valve for automatically adjusting a size of the through-opening in dependence on air pressure. The logarithmic valves have a closing member which opens under a pressure force of the airflow, having an opening resistance rate which substantially logarithmically increases at increasing opening. As a result, and provided a valve pitch over the floor surface area is sufficiently high, under a constant air supply through the inlet, after the initial opening of the valves closest to the air supply inlet, the valve is first maintained at an initial opening size, allowing pressure in the floor space further away from the air supply inlet building up such that valves further away from the air supply inlet also open to the initial opening size. When the incoming air supply through the inlet is increased, the valves closest to the air supply will open further, until air pressure and opening resistance are equal and opposite, which due to the logarithmic increase in resistance results in a limited increase in size of the through-hole and allows the air pressure in the floor space to level such that other valves in the raised flooring with the same valve characteristics open to the same size of through-hole. The required valve pitch is determined based on the available floor space and valve properties such as the valve member opening resistance.

In an embodiment, the raised flooring comprises a sound proofing material, which in the floor surface area:
- forms a resistance against air flow through the floor surface area and varies in thickness and/or density as a function of the distance from the air inlet; and/or
- is provided with through-holes, wherein the number of through-holes per cm^2 and/or size of the through-holes is adapted as a function of the distance from the air supply inlet.
The raised flooring is provided with sound proofing materials to prevent sounds from carrying through the room. The variation in air permeability of the raised flooring may be achieved by using air permeable materials, adapted and/or applied with a specific varying density and/or thickness to provide the required air permeability variation along the floor surface area. This air permeability may be the sound proofing material. For example, foam-like and fabric-like materials such as carpets or felt may both be sound proofing and air permeable. Alternatively, the soundproofing material may have negligible air permeability, such as for example wood, or be provided as a sound-proofing layer to a load carrying surface of the raised flooring, in which case the predetermined specific air permeability is achieved by providing a predetermined amount of through-holes per cm². In the latter case, where the sound proofing material is provided as a sound-proofing layer to the load carrying surface, the though-holes are extending through both the load carrying surface and the sound-proofing layer, wherein a size of the through-hole section in the sound-proofing layer preferably has a larger diameter than the through-hole section in the load carrying surface.

In an embodiment the floor surface area of the raised flooring comprises a protective zone, the protective zone having an increased permeability with respect to the surrounding floor surface area. The increased permeability causes a localised higher laminar vertical flow rate, further reducing transverse transfer of aerosols within the room, due to for example movement of persons past the protective zone, into the volume of air above the protective zone. A protective zone may therefore be provided at a location in the floor surface area where additional protection from transfer of viruses and germs is desirable. Such additional protection may for example be desirable around the work-area of a teacher or child with compromised immunity in a class-room, or a medical assistant's desk in the waiting area of a medical facility.

In an embodiment, a section of the ceiling surface area has a permeability that is equal or higher than a section of the floor surface area that is opposite. As a result, the vertical laminar flow is maintained along the full height of the room between the raised flooring and lowered ceiling. Similarly to the raised flooring, the lowered ceiling may be made of air permeable material, such as fabric. However, since fabric may relatively easy contaminate due to the passing aerosols, preferably use is made of plate materials comprising air outlet openings extending through the ceiling surface, wherein the number of air outlet openings per cm² and/or size of outlet openings in each section of the ceiling surface area is equal or larger than the number of through-holes per cm² and/or size of through-holes in a section of floor surface area that is opposite. Additionally, the lowered ceiling may be provided with sound proofing materials to prevent sounds from carrying through the room. For example, the sound proofing material listed as being suitable for the raised flooring is also suitable sound proofing material for use in the ceiling.

The air supply and air outlet of the ventilation system may be similar to air supplies and air outlets of well-known ventilation systems, or the ventilation system according to the invention may even be using existing air supplies and air outlets, when retrofitted to an existing room. The air supply usually comprises a filter, such as for example a high efficiency particulate air (HEPA) filter for filtering the outside air prior to supplying the air to the floor space. The air outlet usually comprises a filter at least removing particulates such as dust from the exiting air. The filters prevent any particles and pollutants from damaging the air pumps in the ventilation system and ensure the air going into the system is safe and healthy to breathe in. Additionally the air outlet, and possibly air supply, may be provided with a plasma filter for removing any germs and viruses. Further, the air outlet, and optionally also the air supply, may be in thermal connection with a heat exchange unit, for exchanging thermal energy with the outgoing the incoming air.

In an embodiment, the ventilation system further comprises a ventilation unit which comprises the air supply and the air outlet, wherein the air supply comprises an outside-air inlet, arranged for receiving air from an outdoor environment, and an air supply fan, arranged between the outside-air inlet and the air supply inlet, to force air from the outdoor environment to the air supply inlet of the floor space, and wherein the air outlet comprises an inside-air inlet, connected to the ceiling space for exiting air from the ceiling space, an inside-air outlet, connected to the inside-air inlet and arranged for exiting air to the outdoor environment, and an air removal fan, arranged in between the inside-air inlet and the inside-air outlet, to force air from the ceiling space to the inside-air outlet. This results in a dedicated ventilation system for the room, without recirculation of air. Thus air exiting the room via the ceiling is directly replaced by fresh air from the outside environment via the floor. As a result, all air in the room is replaced by fresh outside air and buildup of aerosols inside the room and ventilation system is prevented.

In an embodiment, the ventilation unit further comprises a filter, arranged between the outside-air inlet and the air supply inlet and adapted to filter the incoming air from contaminants. The filter ensures incoming air is free from debris and contaminants. The Filter may for example be a dust filter or a HEPA filter as described above for the existing air supply. Similarly, the air outlet, and possibly air supply, may be provided with a plasma filter for removing any germs and viruses.

In an embodiment, the ventilation unit further comprises a mechanical ventilation heat recovery (MVHR) system, connected to both the air supply and the air outlet and adapted to transfer heat from the air outlet to the air supply, and a bypass arranged between the air supply and the MVHR system and to bypass air from the outside environment around the MVHR system when a temperature of air in the air outlet and/or in the air inlet is equal or higher than a predetermined temperature. The recovery system saves energy by preventing loss of warmth to the outside environment and re-using this warmth to heat up incoming air. The bypass, which for example is active during summer time, allows the incoming air flow to bypass the MVHR system, preventing the air being heated when a lower temperature inside the room is desired.

Preferably, the ventilation unit is a standardized unit, sized to be suitable for most rooms. The capacity of the ventilation unit is limited by the capacity of the fans and the MVHR system provided therein. In a preferred set-up, the capacity of the standardized ventilation unit is around 2000 m³/hour. Should more capacity be required, a further ventilation unit may be added. The benefit of providing the ventilation unit as a standardized unit is that production and developmental costs can be kept relatively low and installation and maintenance of the ventilation units is relatively simple due to each unit being substantially the same.

The ventilation unit may be a modular unit comprising at least four equally sized and shaped modules, preferably eight. Being modular makes installation of the ventilation unit easier. Rather than having to build the whole ventilation unit from separate parts inside the room, the ventilation unit is supplied in standard modules, which are easy and fast to fit together and easier.

The modules are preferablystandardized, making them cheaper to manufacture, since the same modules are used for all ventilation systems. Preferably, a length and a width of each module is equal to at least one time a width of the floor tile, allowing the modules being fitted easily in between the floor tiles of the raised flooring. In Europe, the floor tiles preferably have a width of 60 cm and the modules of the ventilation unit preferably have a width and a height of 60 cm and a length of 120 cm. These sized modules have the added advantage that all modules of a single ventilation unit can be fitted on a single pallet and thus transported as a set. Furthermore, their relative small size allows each module being hand carried to the room in which it is to be fitted, even upstairs. The unit may be formed by at least two stacks of modules, which have a total maximum height of 240 cm and as such will fit in most rooms.

The modules are stacked when installed, thereby taking up only a relatively narrow strip of floor space, which can be covered up to form an additional wall-section or room divider. However, the skilled person will recognise that the total height and width of the stacked modules will depend on the specific (internal) design of each module, which determines their order, positioning and orientation with respect to one another. As a result, it may not be necessary to utilise the full height of the room for the stacked modules and the ventilation unit could potentially also be covered up in a room-feature such as a bar. Furthermore, it will be apparent to the skilled person that, where standard sizes are chosen for parts of the ventilation system, these chosen sizes are based on local standard building sizes. As a result, the sizes chosen for the US market, for example, may differ from the standard sizes chosen for the EU market.

In an embodiment, the ventilation system, further comprises a diffuser, located at the air supply inlet and adapted to direct incoming air into multiple radial directions in the floor space, such that the incoming air is distributed over the floor space at a predetermined distribution. This predetermined distribution may be an even distribution, ensuring incoming air is spread out evenly in all directions under the floor from the air supply inlet. Alternatively, one or more directions may be provided with a higher air flow, thereby generating an increased pressure for locally forcing air into the room at higher flow rate in a protective zone.

A floor tile that is provided for use in a ventilation system as described above may have a predetermined permeability and sound proofing.

The floor tiles may comprise a plurality of through-holes, each through hole being provided with a logarithmic valve for automatically adjusting a size of the through-opening in dependence on air pressure on either side of the floor tile.

Alternatively, the floor tiles may comprise a plurality of through-holes and a moveable blocking member that is displaceable along a surface area of the floor tile for at least partly blocking off the through-holes.

A floor section for use in a ventilation system as described above is provided, comprising a floor tile and a height adjustable support.

A set of a number of floor tiles for use in a ventilation system as described above may be provided, wherein each of the floor tiles comprises an identification which is related to a position of the floor tile within the raised flooring of the ventilation system, and wherein each floor tile has a predetermined permeability dependent on the position of the floor tile with respect to the position of the air supply inlet.

A set of a number of floor tiles for use in a ventilation system as described above may be provided, wherein each of the floor tiles comprises an identification which is related to a position of the floor tile with respect to a position of the air supply inlet of the ventilation system, and wherein each floor tile comprises a sensor and an electrical actuator, which are connectable to a controller via a connection, which connection is recognisable and operable according to the identification.

A set of modules for forming a ventilation unit for use in a ventilation system as described above may be provided, the set of modules comprising:
- a first and a second fan module, each comprising a fan
- a first and a second inlet module, each comprising an air inlet
- a first and a second outlet module, each comprising an air outlet, and preferably
- a MVHR system module, comprising a MVHR system and a bypass,
wherein the modules are stackable and connectable such that the first inlet module, the first fan module and the first outlet module form an air supply channel and the second inlet module, the second fan module and the second outlet module form an air outlet channel.

Effectively two stacks of modules can be created, one forming the air inlet channel and one forming the air outlet channel. The MVHR system module may be fitted in between the second inlet module and the second fan module. To enable heat exchange with the air inlet channel, a channel section thereof passes through the same module. In order to align the stacks of modules, therefore a second MVHR system module may be incorporated, providing additional space for routing of internal piping past the MVHR system and the bypass.

In an embodiment, each module is comprised in a housing, and wherein the housing has a length equal to the width of two floor tiles and a depth equal to the width of one floor tile, allowing the modules being fitted easily in between the floor tiles of the raised flooring.

In a further embodiment, coves or silencers are placed under the raised flooring abutting the ventilation unit. The coves or silencers reduce transfer of vibrations between the ventilation unit and the raised flooring. Preferably the coves or silencers are shaped to fit in between the height adjustable support of a floor tile, such that the floor tile is placed on top of the cove or silencer.

According to an aspect of the invention, a room is provided, comprising:
at least one modular ventilation unit, which forms a wall-section inside the room and is with a first air inlet and with a first air outlet directly connected to an outside environment;
   a lowered ceiling having a ceiling surface area that is air permeable, the lowered ceiling defining a ceiling space which is between the lowered ceiling and the ceiling of the room, said ceiling space being connected to a second air inlet of the at least one modular ventilation unit, for removal of air from the celing space; and
a raised flooring having a floor surface area opposite to the permeable ceiling surface area, the raised flooring defining a floor space which is between the raised flooring and a floor of the room, said floor space being connected to a second air outlet of the at least one modular ventilation unit, for supplying air into the floor space;
wherein the air permeability of the raised flooring varies in dependence on distance from the second air outlet of the at least one modular ventilation unit.

The at least one modular ventilation unit may be located in an optimal location depending on the use of the room, with the variation in permeability of the raised flooring and lowered ceiling corresponding to this location. The optimal location depends on the preferred lay-out of the room, based on for example the seating arrangement in a restaurant or the workspace lay-out of an open office, school room or gym.

According to the invention, a method for installing a ventilation system as described above in a room is provided, comprising
- providing a vertical air duct along one wall, connected to an air supply channel in the ceiling of the room and extending to the floor for forming an air inlet,
- providing a lowered ceiling at a predetermined distance from the ceiling of the room, and
- providing a raised flooring composed of a support frame and floor tiles, wherein each floor tile is coded to fit in a predetermined position in the raised flooring and is provided with a predetermined air permeability that is related to the distance of the floor element from the air inlet. This method may be used, for example, to install (retrofit) a ventilation system according to the present invention in a room with an existing in- and outlet- of an air-conditioning system. The vertical air duct serves as an adapter for connecting the raised flooring to the air inlet, which in existing buildings is commonly located in the ceiling. Obviously, the ventilation system according to the invention can also be installed in rooms with air inlets and/or outlets of the room located in other positions than the ceiling. In these rooms, the vertical air duct may be oriented with a longitudinal axis at a non-perpendicular angle to the floor surface of the room.

In an alternative embodiment according to the invention, the method for installing a ventilation system, comprises the steps of:
- providing two through-openings in the room, to an outside environment,
- providing a dedicated ventilation unit in the room and connecting said ventilation unit with a first inlet to a first of the two through-openings and with a second outlet to a second of the two through-openings, and extending a first outlet of the ventilation unit to the floor of the room for forming an air inlet and extending a second inlet of the ventilation unit to the ceiling of the room
- providing a lowered ceiling at a predetermined distance from the ceiling of the room, and
- providing a raised flooring composed of a support frame and floor tiles, wherein each floor tile is coded to fit in a predetermined position in the raised flooring and is provided with a predetermined air permeability that is related to the distance of the floor element from the air inlet.

### Brief description of the drawings

Embodiments of a ventilation systemaccording to the present invention will be described by way of example, with reference to the attached drawings, in which:
Fig. 1 shows a perspective view of a classroom provided with a ventilation system according to the invention;
Fig. 2A shows a top view of the raised flooring of the ventilation system in Fig. 1;
Fig. 2B shows a detailed view of section IIB of the raised flooring in Fig. 2A;
Fig. 3 shows a top view of an embodiment of the lowered ceiling of the ventilation system in Fig. 1;
Figs. 4A and 4B show a respective top and bottom perspective view of a floor section for a raised flooring of a ventilation system according to the invention; and
Figs 5A, 5B and 5C show a logarithmic valve for use in a raised flooring of a ventilation system according to the invention under three different air pressure conditions;
Fig. 6 shows a perspective view of a ventilation unit for use with a ventilation system according to the invention;
Fig. 7 shows a frontal view of the ventilation unit of Fig. 6;
Fig. 8 shows a side view of the ventilation unit of Fig. 6;
Fig. 9 shows an exploded view of the ventilation unit of Fig. 6, showing the individual modules the ventilation unit is made of;
Fig. 10 shows a perspective view of an office provided with a ventilation system according to the invention; and
Fig. 11 shows a cross-section of part of the floor space at the air supply, where a diffuser is provided.

### Description of embodiments

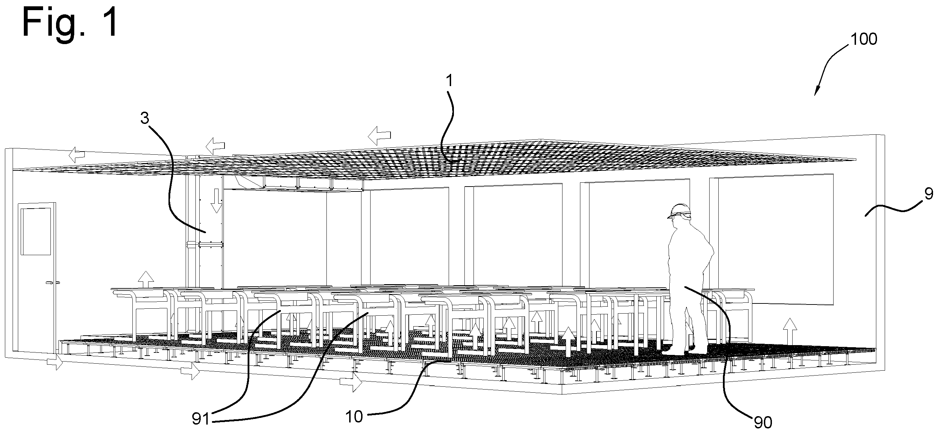

Fig. 1 shows a perspective view of a classroom provided with a ventilation system 100 according to the invention, having a wall 9 extending between the floor and the ceiling of the room. The ventilation system in the room 100 is shown to have a raised flooring 10, a lowered ceiling 1 and an air supply inlet 3. The raised flooring 100 and lowered ceiling 1 are both air permeable over surface areas which are located opposite one another, covering a substantial surface area of the respective floor and ceiling of the room and being substantially parallel thereto. Due to the raised flooring and lowered ceiling, the room is vertically divided into three volumes: a floor space, between the floor of the room and the raised flooring 10, a user space for use of the room, extending between the raised flooring 10 and the lowered ceiling 1, and a ceiling space, between the lowered ceiling 1 and the ceiling of the room. The air supply inlet 3 is connected to the floor space for supplying fresh air from the buildings air-conditioning system. The air permeability of the raised flooring 10 varies in dependence on distance from the air supply inlet 3 for forming a substantial vertical air flow entering the user space of the room through the raised flooring 10 having a substantially even flow rate over the permeable floor surface area. This causes the incoming fresh air to displace the air already present in the user space of the room vertically, forcing it towards the lowered ceiling 1 and through the lowered ceiling surface area for exiting the room.

Through varying the air permeability of the raised flooring 10 in dependence on distance from the air supply inlet 3, the air entering the room through the raised flooring has substantially the same flow rate over the whole floor surface area substantially the same volume and flow speed, causing a vertical laminar flow of fresh air entering the room via the floor. The directly opposite permeable ceiling surface area allows the vertical laminar flow of fresh air being maintained substantially vertical and laminar over the entire height of the room between the raised flooring 10 and lowered ceiling 1, preventing the mixing of air due to ventilation and minimizing transverse movement of aerosols inside the room, for example due to persons moving through the user space.

In the classroom, on the raised flooring 10, desks for pupils 91 and a teachers desk 90 are placed. In order to further prevent the chances of transverse spreading of aerosols between, for example, pupils and teacher, or to a specific pupil, the permeability of the raised flooring immediately under and around their desks 90, 91 may be increased with respect to the surrounding raised flooring, providing a protective zone. In this protective zone, the vertical laminar air flow is increased with respect to the vertical laminar air flow in the rest of the user space of the room, effectively creating a curtain-effect preventing substantially all air transfer from the rest of the user space of the room into the protective zone.

Although the example in Fig. 1 shows a classroom, the same ventilation system may be used in any room and protective zones can be set up where and as desired.

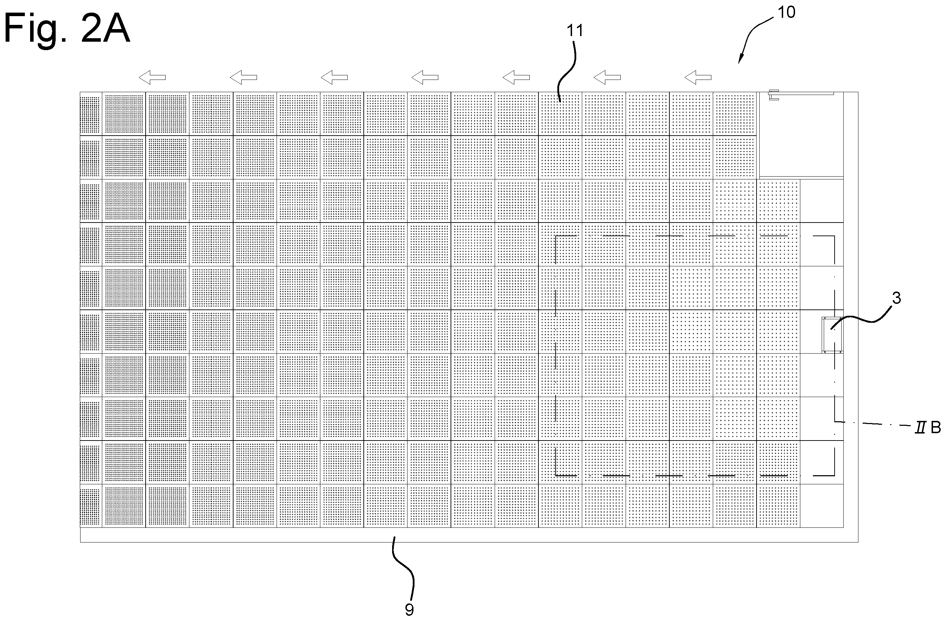

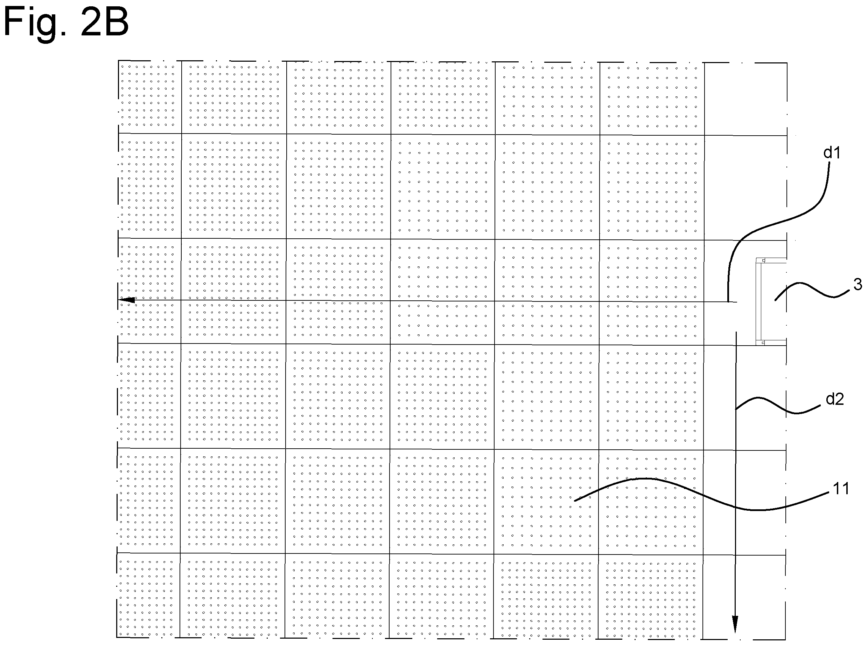

Fig. 2A shows a top view of the raised flooring 10 of the ventilation system in Fig. 1, with Fig. 2B showing s a detailed view of section IIB thereof. The raised flooring 10 has an air permeable surface area consisting of floor tiles 11. The number of through-holes per cm² in each tile 11 is increased with increasing distance d1, d2 from the air supply inlet 3. In order to install the raised flooring 10, a lay-pattern of floor tiles 11 having varying amounts of through-holes per cm² needs to be determined, based on the dimensions of the room and the required air refreshing rate thereof. To facilitate easy installation of the raised flooring 10, a set of floor tiles 11 may be provided wherein each of the floor tiles 11 is provided with an ID related to a row number with respect to the air inlet and a position within that row from one side of the raised flooring 10.

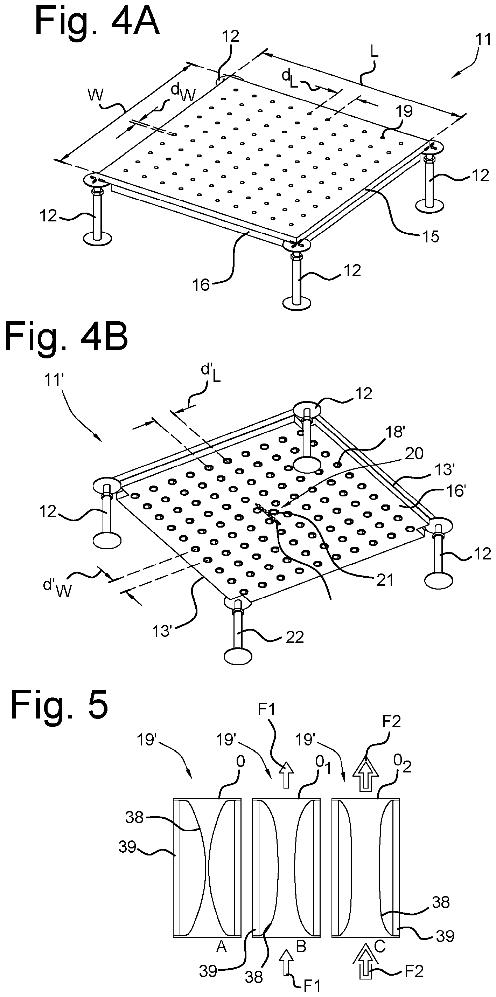

Providing floor tiles 11 with through-holes is a relatively easy manner of obtaining tiles with a predetermined and constant air permeability. Additionally or alternatively, the size of the through-holes may adapted as a function of the distance from the air supply inlet 3. The size of the through-holes may be made adjustable such that a single tile design can be used for the entire raised flooring, removing the requirement of designing a predetermined lay-pattern for each specific room. Such tiles are described in more detail in relation to Figs. 4A 4B and 5.

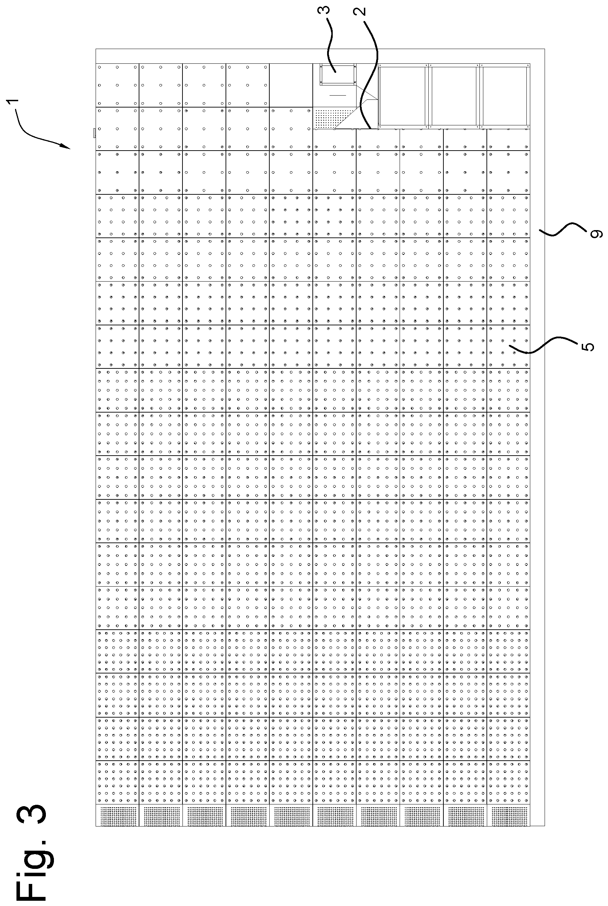

Fig. 3 shows a top view of the lowered ceiling 1 of the ventilation system 100 in Fig. 1. Similar to the raised flooring 10, the lowered ceiling 1 has an air permeable surface area consisting of tiles 5. To facilitate the vertical laminar air flow through the user space of the room remaining vertical over the entire height thereof, each section of the ceiling surface area has a permeability that is equal or higher than a section of the floor surface area that is opposite therefrom. Hereto, the depicted ceiling 1 has tiles 5, wherein the number of through-holes per cm² in each tile 5 is increased with increasing distance d1, d2 from the air supply inlet 3. Further, the top view of the ceiling 1 shows an air outlet 2, connecting the ceiling space to the outlet of the air-conditioning system for removing the exiting air from the room.

Figs. 4A and 4B show a respective top and bottom perspective view of embodiments of a floor section for a raised flooring of a ventilation system according to the invention, the top perspective view of Fig 4A being similar to the floor tiles with fixed hole size and pitch shown in Figs. 2A and 2B.

The floor section in Fig. 4A shows a floor tile 11 with four adjustable supports 12, for forming a supporting frame which supports the raised flooring at a predetermined distance from the floor of a room. The floor tile 11 has a predetermined width W and length L and is provided with a number of through-holes 19 having a hole size Φ₁, which are spaced apart at a fixed width-wise and length-wise pitch dw, dl. At a lower side, the floor tile 11 is provided with a layer of sound proofing material 16, which layer extends over most of the lower side of the floor tile 11. In order not to impact the predetermined air permeability of the floor tile, as provided by the pattern of through-holes, the layer of sound proofing material is provided with a matching pattern of through-holes, having a larger hole size.

The floor section in Fig. 4B shows a similar floor tile 11' as the floor tile 11 in Fig. 4A, now from the bottom. Additionally or alternatively to the layer of soundproofing, the floor tile 11' is provided with a moveable blocking member 16' that is held in guide rails 13' to the lower side of the tile 11' and provided with an electrical actuator in the form of a rack and pinion 22, 21 for displacing the blocking member 16' in the guide rails, along the bottom surface of the tile 11'. The floor tile 11' further comprises a pressure sensor 18', located in a through-hole, for sensing an air flow pressure through the floor tile. The blocking member 16' is provided with through-holes 19' in a pattern matching the pattern of through-holes of the tile 11', i.e. thus the length-wise and width-wise pitch dl', dw' of the through-holes in the blocking member 16' is equal to those of the tile. The size Φ₂ of the through-holes 19' is larger than the size Φ₁ of the through-holes in the tile 11'. By moving the blocking member 16', the effective through-hole size of the tile 11' is adjustable. This adjustability is automated by connecting the electric actuator 21, 22 and the sensor 18' to a controller (not shown). By connecting all floor tiles 11' of the raised flooring to the controller, the controller the through-hole size of each floor tile 11' until the measured flow pressure of each tile is substantially the same.

Alternatively to an electrically controlled system, the variability of the air permeability of the raised flooring 10 in dependence on distance from the air supply inlet 3 can be automated by fitting each of the through-holes in the tiles with logarithmic valves. Figs 5A, 5B and 5C show such a logarithmic valve under three different air pressure conditions. The logarithmic valve comprises a tubular outer body 39 and a flexible inner tube 38, which has a dome-shaped cross-section and is with an upper and a lower side fixed to both ends of the tubular outer body 39, forming the closing member of the valve 19'. As shown in Fig. 5a, when the air pressure on both ends of the valve is equal, the flexible inner tube 38 closes off the valve, such that no though-opening exists and the flow rate O through the valve is zero.

The dome-shaped flexible inner tube 38 has an opening resistance rate which substantially logarithmically increases at increasing opening. Thus when an air flow of increasing pressure is applied to one side of the valve, the inner tube 38 generates an initial opening O₁ matching a first pressure level F₁ which is lower than the increasing pressure. When the valve is placed between two separate spaces, this causes the pressure inside the space on the inlet side of the valve to rise. Between two connected spaces with a plurality of through-holes and one air inlet, this reduces the effect of pressure drop due to the presence of the opening of the valve and depending on the amount of valves, their pitch and valve properties, all valves may be opened to the same opening size before a further increase in incoming air pressure opens the valves closest to the air supply inlet further. Thus with a sufficient amount of valves provided in the raised flooring, this effect ensures a more homogeneous pressure distribution in the floor space, such that all valves over the floor surface area open to substantially the same size and produce a vertical laminar flow of substantial equal flow rate in the user space.

A protective zone may be provided by an increased amount of the same logarithmic valves and/or using valves with a lower opening resistance in a predetermined area of the raised flooring, increasing the amount of air outputted into the protective zone with respect to the surrounding floor surface area.

Although the logarithmic valve is depicted with an inner tube having a dome-shaped cross-section, alternatively shaped valves having the same functionality are known and may be implemented instead. An alternative, well-known, logarithmic valve, for example, comprises a layer of silicon, or other soft flexible material, of predetermined thickness, which covers the through-holes in the floor tile, wherein the layer of material is provided with an x-cut within the circumference of each through-hole. The x-cut provides an opening through the material layer, which opening size depends on the pressure difference between each side of the x-cut and has an opening resistance rate which increases at increasing opening, similar to the depicted logarithmic valve.

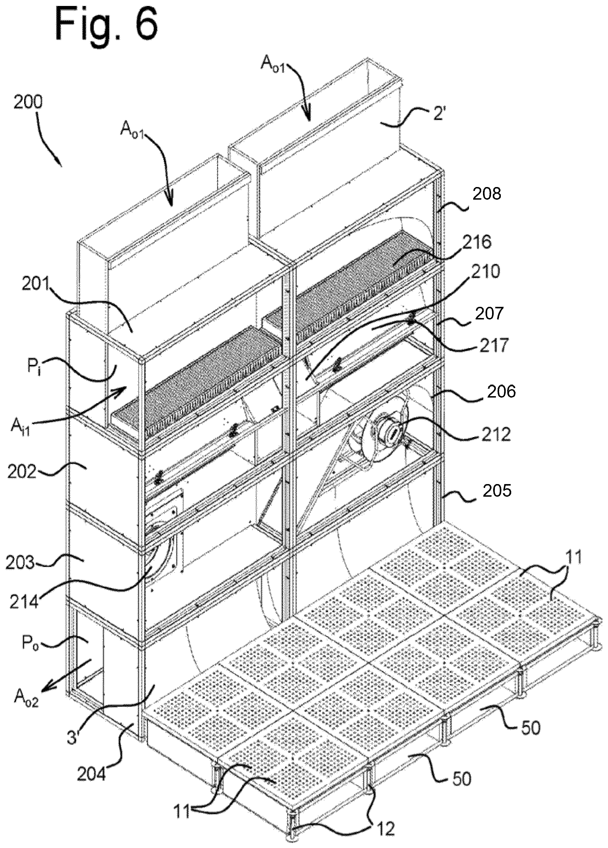

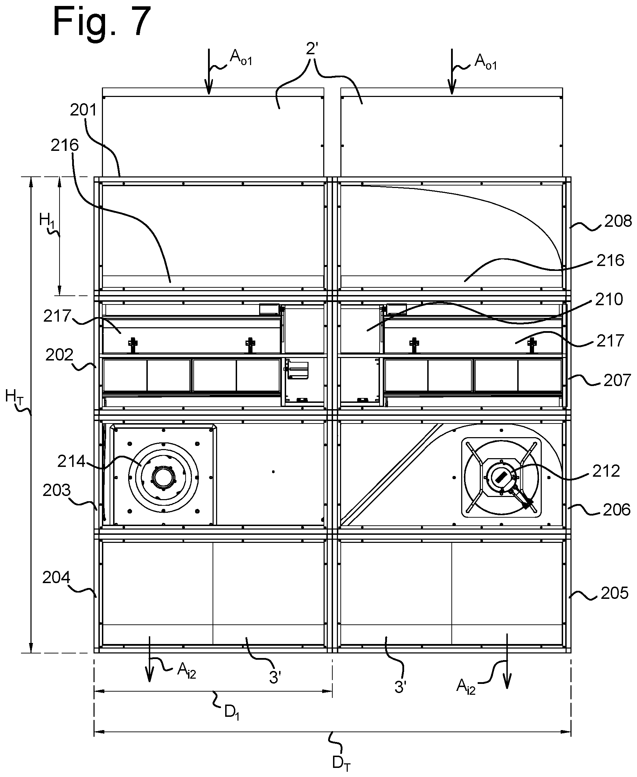

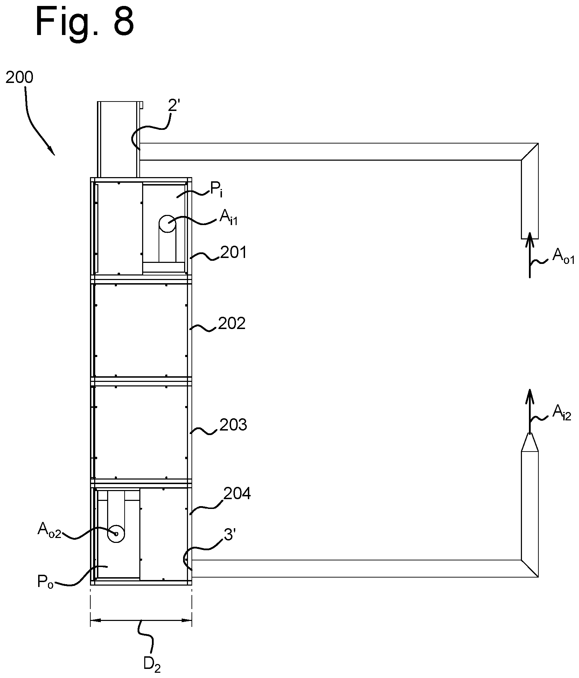

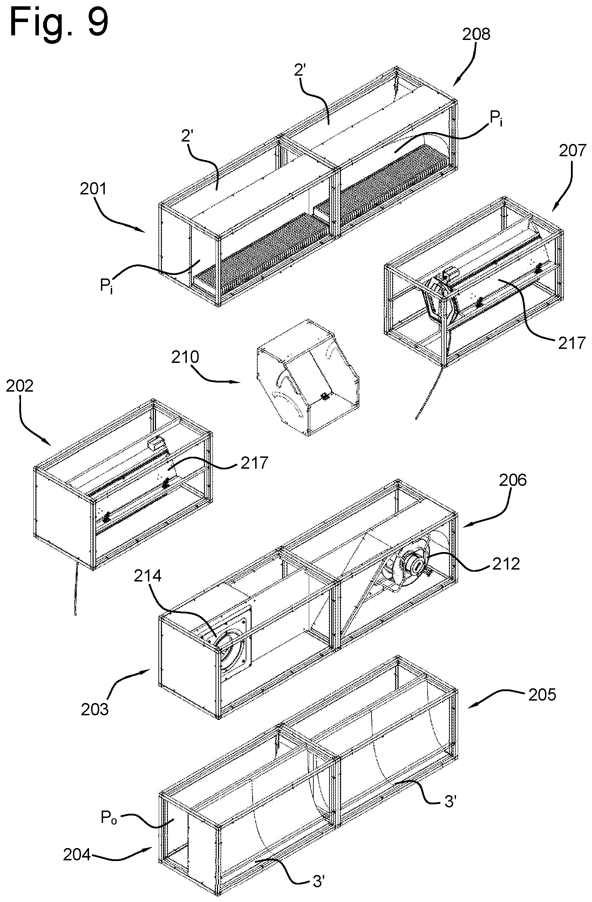

Figs. 6, 7, 8 and 9 respectively show a perspective view, a frontal view, a side view and an exploded view of a ventilation unit 200 for use with a ventilation system according to the invention. Said ventilation unit 200 is a dedicated ventilation unit dedicated to the ventilation system in a room, such that each room in a building supplied with a ventilation system according to the invention is independently ventilated and cross-contamination between rooms by the ventilation system is fully prevented.

The ventilation unit 200 as depicted consists of eight modules 201, 202, 203, 204, 205, 206, 207, 208, together comprising air inlet piping Pi, air outlet piping Po, a filter 216, an air supply fan 212, an air removal fan 214, a bypass 210 and a mechanical ventilation heat recovery (MVHR) system 217. Each module 201, 202, 203, 204, 205, 206, 207, 208 is dedicated to a specific function within the ventilation unit 200, such that there is an outside air inlet module 201 comprising an outside air inlet Ai1, an outside air outlet module 204 comprising an outside air outlet Ao2, an inside air inlet module 206 comprising the air supply inlet 3', an inside air outlet module 208 comprising the air outlet 2', an air supply fan module 206 comprising the air supply fan 212, an air removal fan module 203 comprising the air removal fan 214 and two MVHR system modules 202,207 comprising the MVHR system 217 and bypass 210. The modules 201, 202, 203, 204, 205, 206, 207, 208 are stacked together in two columns of equal height.

The air inlet piping Pi extends between the outside air inlet Ai1, which forms a first air inlet of the ventilation unit 200, and an air supply inlet 3', which forms a second air outlet Ao2 of the ventilation unit 200, through the inside air inlet module 206 and the MVHR system modules 202, 207, via the air supply fan module 206 to the outside air outlet module 204. The air supply inlet 3' as depicted in the figures extends along the bottom surface of both the outside air outlet module 204 and the inside air outlet module 205, such that incoming air is distributed along a width of the floor prior to entering the floor space. The filter 216 is arranged in the air inlet piping Pi between the outside air inlet Ai and the MVHR system modules 202, 207, ensuring any dust, debris and other undesired contaminants are filtered from the incoming air prior to entering the MVHR system. The air supply fan 212 is arranged in between the air inlet piping Pi, such that rotation of the air supply fan 212 forces air from the outside air inlet Ai1 to the air supply inlet 3'.

The air outlet piping Po extends between an air outlet 2', which forms a second air inlet A01 to the ventilation unit 200, and an outside air outlet Ao2, which forms the first air outlet of the ventilation unit 200. The air removal fan 214 is arranged in between the air outlet piping Po, such that rotation of the air removal fan 214 forces air from the air outlet 2' to the outside air outlet Ao2. Prior to the air removal fan 214, the outlet piping is lead through the MVHR system 217, for recovering heat from the air passing through the outlet piping Po. The bypass 210 is provided onto the MVHR system 217, and provided in between sections of the inlet piping Pi prior to the positioning of the air supply fan 212. Via the bypass 210, incoming air through the inlet piping Pi is heated by the MVHR system 217 or, depending on a desired temperature inside the room compared to a temperature of the incoming air, lead around the MVHR system 217 to substantially maintain the outside air temperature.

Due to the arrangements of the air inlet and outlet piping and affiliated systems, the ventilation unit 200 is formed by two abutting columns of modules. One column is, in stacking order, formed by the outside air outlet module 204, the air removal fan module 203, one of the MVHR system and bypass modules 202 and the outside air inlet module 201. The other column is, in stacking order, formed by the inside air inlet module 205, the air supply fan module 206, the other of the MVHR system and bypass modules 207 and the inside air outlet module 208.

Each of the eight modules 201, 202, 203, 204, 205, 206, 207, 208 is equal in size and shape, having a length D1 equal to two times the width of a floor tile and a height H1 and width D2 equal to the width of a floor tile, such that the total length DT and total height HT of the ventilation unit are each four times the width of a floor tile. By ensuring the size of the modules matches the size of the floor tiles, the modules are easy to fit in between the tiles when placing the raised flooring around the modules.

The modules are made of a material which provides each module with sufficient stiffness and rigidity to allow the modules being stacked without affecting their shape, whilst being relatively light-weight, for ease of transport and installation. Hereto, the side surfaces of the modules may comprise sheets of a metallic material. However, preferably the side surfaces of the modules are made of wood, providing sound and vibrational insulation between the ventilation unit and the room in which it is placed.

Preferably, the floor tiles have a standard width and length of 60 cm (or about 24 inch), resulting in the ventilation unit 200 having both a total length DT and height HT of 240 cm (or about 96 inch). This height will fit into most rooms and allows the ventilation unit being integrated in the room design as a wall-section, either forming (part of) an external room wall or internal partitioning wall, depending on the particular size and use of the room.

In order to further reduce vibrations and noise from transferring between the flooring and the modules, dampers 50 are provided below the floor tiles directly abutting the ventilation unit 200, as shown in Fig. 6. These dampers are box-shaped elements, fitting between the supports 12, and are open on two opposite sides, for allowing air to flow through. The top of the dampers 50 may be provided with openings matching the openings in the floor tiles, but are preferably closed in order to provide optimal damping. Each of the box-shaped elements are preferably made of wood panels, and provided with one or more layers of foamed material on an inner surface thereof. These box-shaped elements are relatively easy and cheap to manufacture. However, it will be apparent to the skilled person that alternative materials, such as for example rubbers, and/or shapes, may be implemented to achieve a desired damping.

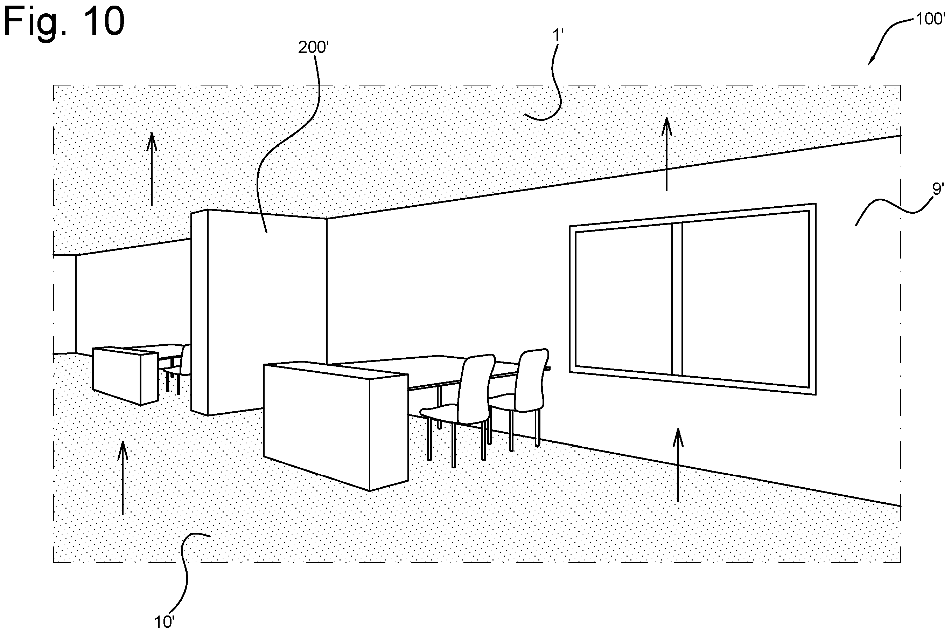

Fig. 10 shows a perspective view of a room 100' which is used as an open plan office, and which is provided with a ventilation system according to the invention. Alternative to the room 100 shown in Fig. 1, the ventilation system shown in Fig. 10 comprises a partition wall 200' masking a ventilation unit 200 as shown in Figs. 6 - 9. The positioning of the partition wall 200', and thus the ventilation unit, is chosen to fit with the floorplan of the workspace inside the office 100'. The permeable raised flooring 10' and permeable lowered ceiling 1' are laid around the partition wall 200' and both have a hole pattern which depends on the distance from the partition wall 200'. In very large rooms, additional ventilation units may be included, with the hole pattern in both the raised flooring and the lowered ceiling being adjusted therefor. It will be apparent that the ventilation system in the room as depicted in Fig. 10 could be equally beneficially fitted in other rooms, including but not limited to classrooms, shops, gyms, nurseries and nursing homes.

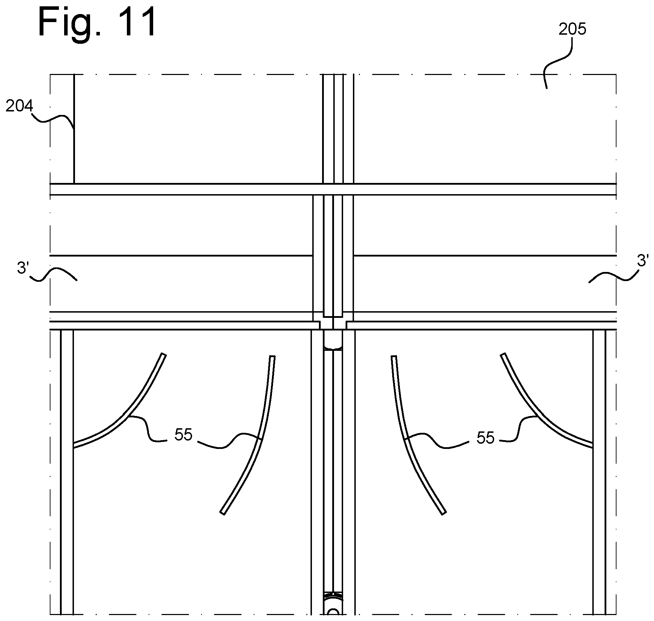

In order to further enhance the distribution of air from the air inlet over the floor area, a diffuser may be provided in the floor space at the air supply 3'. Fig. 11 shows a cross-section of part of the floor space at the air supply 3', with an example of such a diffuser 55. The diffuser 55 has a number of fins, which are placed at varying angles with respect to the air supply 3', forming a fanned shape when seen from above. The fanned shape directs the incoming air flow into all directions of the floor space, aiding a more even distribution of air. The pattern of fins of the diffuser may be adjusted to a predetermined desired air distribution.

The present invention has been described above with reference to a number of exemplary embodiments as shown in the drawings. Modifications and alternative implementations of some parts or elements are possible, and are included in the scope of protection as defined in the appended claims.

## Claims

1. A ventilation system (100) for ventilating a room, comprising:
a raised flooring (10), being supported by a support frame (12), defining a floor space which, when installed, is between the raised flooring (10) and a floor of the room, the raised flooring being air permeable over a floor surface area, and
an air supply connected with an air supply inlet (3,3') to the floor space for supplying air into the floor space;
a lowered ceiling (1), defining a ceiling space which, when installed, is between the lowered ceiling and a ceiling of the room and an air outlet (2,2'), connected to the ceiling space for exiting air from the ceiling space, the lowered ceiling (1) having a ceiling surface area that is air permeable;
the permeable floor surface area being opposite to the air permeable ceiling surface area;
**characterised in that**
the air permeability of the raised flooring varies in dependence on the distance from the air supply inlet (3,3') for forming a substantial vertical air flow in which air entering the room through the floor surface area displaces air in the room in the vertical direction and forces air out through the ceiling surface area.

2. The ventilation system (100) according to claim 1, wherein the raised flooring (10) comprises a plurality of floor tiles (11, 11') with through-holes(19, 19'), wherein the number of through-holes per cm² and/or size of the through-holes is adapted as a function of the distance from the air supply inlet (3,3').

3. The ventilation system (100) according to claim 2, wherein each floor tile (11,11') is provided with a moveable blocking member (16') that is displaceable along a surface area of the tile for at least partly blocking off the through-holes (19,19').

4. The ventilation system (100) according to claim 3, wherein each floor tile further comprises a pressure sensor (18') for sensing an air flow pressure through the floor tile and an electric actuator (21,22) arranged for displacing the blocking member (16') along the surface area of the tile (11,11), and wherein the ventilation system further comprises a controller which is with an input connected to each sensor (18'), for receiving a measured pressure value, and adapted for determining an air pressure distribution over the surface of the flooring surface area, and which controller is with an output connected to each electric actuator (21,22), and adapted for operating each electric actuator to displace the blocking member (16') adjusting the size of the through-holes (19,19') of a respective floor tile in dependence of the received pressure value of the respective floor tile and the calculated pressure distribution.

5. The ventilation system (100) according to claim 3 or 4, wherein each floor tile (11,11') is provided with upper through-openings (19) of a first diameter in a predefined pattern and wherein the blocking member is provided with lower through-openings (19') in a predefined pattern matching the predefined pattern of the upper through-openings, each lower through-opening having a second diameter which is larger than the first diameter or being slot-shaped, having a length which is larger than the first diameter and a width at least equal to the first diameter, the upper and lower through-openings forming the through-holes of the floor tile.

6. The ventilation system (100) according to claim 2, wherein each of the through-holes in each floor tile is provided with a logarithmic valve for automatically adjusting a size of the through-opening (19,19') in dependence on air pressure.

7. The ventilation system (100) according to any one of the preceding claims, wherein the raised flooring comprises a sound proofing material (16), which in the floor surface area
- forms a resistance against air flow through the floor surface area and varies in thickness and/or density as a function of the distance from the air inlet; and/or
- is provided with through-holes, wherein the number of through-holes per cm² and/or size of the through-holes is adapted as a function of the distance from the air supply inlet.

8. The ventilation system (100) according to any one of the preceding claims, wherein the floor surface area of the raised flooring comprises a protective zone, the protective zone having an increased permeability with respect to the surrounding floor surface area.

9. The ventilation system (100) according to any one of claims 2 - 8, wherein a section of the ceiling surface area has a permeability that is equal or higher than a section of the floor surface area that is opposite.

10. The ventilation system (100) according to any one of the preceding claims, further comprising a ventilation unit (200) which comprises the air supply and the air outlet (2,2'), wherein
the air supply comprises
an outside-air inlet (201), arranged for receiving air from an outdoor environment, and
an air supply fan (212), arranged between the outside-air inlet and the air supply inlet (3,3'), to force air from the outdoor environment to the air supply inlet of the floor space,
and wherein the air outlet (2,2') comprises
an inside-air inlet (205), connected to the ceiling space for exiting air from the ceiling space,
an inside-air outlet (208), connected to the inside-air inlet and arranged for exiting air to the outdoor environment, and
an air removal fan (214), arranged in between the inside-air inlet (205) and the inside-air outlet (205), to force air from the ceiling space to the inside-air outlet (208).

11. The ventilation system (100) according to claim 10, wherein the ventilation unit further comprises a filter (216), arranged between the outside-air inlet (201) and the air supply inlet (3,3') and adapted to filter the incoming air from contaminants.

12. The ventilation system (100) according to claim 10 or 11, wherein the ventilation unit further comprises a mechanical ventilation heat recovery (MVHR) system (217), connected to both the air supply and the air outlet (2,2') and adapted to transfer heat from the air outlet to the air supply, and a bypass (210) arranged between the air supply and the MVHR system (217) and to bypass air from the outside environment around the MVHR system when a temperature of air in the air outlet and/or in the air inlet is equal or higher than a predetermined temperature.

13. The ventilation system (100) according to any one of claims 10 to 12, wherein the ventilation unit is a modular unit comprising at least four equally sized and shaped modules (201,202,203,204,205,206,207,208), preferably eight.

14. The ventilation system (100) according to any one of the preceding claims, further comprising a diffuser, located at the air supply inlet (3,3') and adapted to direct incoming air into multiple radial directions in the floor space, such that the incoming air is distributed over the floor space at a predetermined distribution.

15. A method for installing a ventilation system according to any one of claims 1 to 9 in a room, comprising
- providing a vertical air duct along one wall, connected to an air supply channel in the ceiling of the room and extending to the floor for forming an air inlet,
- providing a lowered ceiling at a predetermined distance from the ceiling of the room, and
- providing a raised flooring composed of a support frame and floor tiles, wherein each floor tile is coded to fit in a predetermined position in the raised flooring and is provided with a predetermined air permeability that is related to the distance of the floor element from the air inlet.

16. A method for installing a ventilation system according to any one of claims 1 to 14 in a room, comprising
- providing two through-openings in the room, to an outside environment,
- providing a dedicated ventilation unit in the room and connecting said ventilation unit with a first inlet to a first of the two through-openings and with a second outlet to a second of the two through-openings, and extending a first outlet of the ventilation unit to the floor of the room for forming an air inlet and extending a second inlet of the ventilation unit to the ceiling of the room
- providing a lowered ceiling at a predetermined distance from the ceiling of the room, and
- providing a raised flooring composed of a support frame and floor tiles, wherein each floor tile is coded to fit in a predetermined position in the raised flooring and is provided with a predetermined air permeability that is related to the distance of the floor element from the air inlet.

## Patentansprüche

1. Lüftungssystem (100) zum Lüften eines Raums, das Folgendes umfasst:
einen Doppelboden (10), der von einem Trägerrahmen (12) getragen wird und einen Bodenraum definiert, der sich im installierten Zustand zwischen dem Doppelboden (10) und einem Boden des Raums befindet, wobei der Doppelboden über eine Bodenfläche luftdurchlässig ist, und
eine Luftzufuhr, die mit einem Luftzufuhreinlass (3,3') mit dem Bodenraum verbunden ist, um Luft in die Bodenraum zuzuführen;
eine abgehängte Decke (1), die einen Deckenraum definiert, der sich im installierten Zustand zwischen der abgehängten Decke und einer Decke des Raums befindet, und einen Luftauslass (2,2'), der mit dem Deckenraum zum Austreten von Luft aus dem Deckenraum verbunden ist, wobei die abgehängte Decke (1) eine luftdurchlässige Deckenfläche aufweist;
wobei die durchlässige Bodenfläche der luftdurchlässigen Deckenfläche gegenüberliegt;
**dadurch gekennzeichnet, dass**
die Luftdurchlässigkeit des Doppelbodens in Abhängigkeit von dem Abstand von dem Luftzufuhreinlass (3,3') variiert, um einen im Wesentlichen vertikalen Luftstrom zu bilden, bei dem die durch die Bodenfläche in den Raum eintretende Luft die Luft in dem Raum in vertikaler Richtung verdrängt und die Luft durch die Deckenfläche nach außen drückt.

2. Lüftungssystem (100) nach Anspruch 1, wobei der Doppelboden (10) eine Vielzahl von Bodenfliesen (11, 11') mit Durchgangslöchern (19,19') umfasst, wobei die Anzahl von Durchgangslöchern pro cm² und/oder die Größe der Durchgangslöcher in Abhängigkeit von dem Abstand von dem Luftzufuhreinlass (3,3') angepasst ist.

3. Lüftungssystem (100) nach Anspruch 2, wobei jede Bodenfliese (11,11') mit einem beweglichen Sperrelement (16') versehen ist, das entlang einer Oberfläche der Fliese verschiebbar ist, um die Durchgangslöcher (19,19') zumindest teilweise zu versperren.

4. Lüftungssystem (100) nach Anspruch 3, wobei jede Bodenfliese ferner einen Drucksensor (18') zum Erfassen eines Luftströmungsdrucks durch die Bodenfliese und einen elektrischen Aktuator (21,22) umfasst, der zum Verschieben des Sperrelements (16') entlang der Oberfläche der Fliese (11,11') angeordnet ist, und wobei das Lüftungssystem ferner eine Steuerung umfasst, die mit einem Eingang mit jedem Sensor (18') verbunden ist, um einen gemessenen Druckwert zu empfangen, und dazu geeignet ist, eine Luftdruckverteilung über die Oberfläche der Bodenfläche zu bestimmen, und wobei die Steuerung mit einem Ausgang mit jedem elektrischen Aktuator (21,22) verbunden ist und dazu geeignet ist, jeden elektrischen Aktuator zu betreiben, um das Sperrelement (16') zu verschieben und dadurch die Größe der Durchgangslöcher (19,19') einer jeweiligen Bodenfliese in Abhängigkeit von dem empfangenen Druckwert der jeweiligen Bodenfliese und der berechneten Druckverteilung einzustellen.

5. Lüftungssystem (100) nach Anspruch 3 oder 4, wobei jede Bodenfliese (11,11') mit oberen Durchgangsöffnungen (19) eines ersten Durchmessers in einem vordefinierten Muster versehen ist und wobei das Sperrelement mit unteren Durchgangsöffnungen (19') in einem vordefinierten Muster versehen ist, das dem vordefinierten Muster der oberen Durchgangsöffnungen entspricht, wobei jede untere Durchgangsöffnung einen zweiten Durchmesser aufweist, der größer als der erste Durchmesser oder schlitzförmig ist und eine Länge, die größer als der erste Durchmesser ist, und eine Breite aufweist, die mindestens dem ersten Durchmesser entspricht, wobei die oberen und unteren Durchgangsöffnungen die Durchgangslöcher der Bodenfliese bilden.

6. Lüftungssystem (100) nach Anspruch 2, wobei jedes der Durchgangslöcher in jeder Bodenfliese mit einem logarithmischen Ventil zum automatischen Anpassen einer Größe der Durchgangsöffnung (19,19') in Abhängigkeit von dem Luftdruck versehen ist.

7. Lüftungssystem (100) nach einem der vorhergehenden Ansprüche, wobei der Doppelboden ein schalldämmendes Material (16) umfasst, das in der Bodenfläche
- einen Widerstand gegen den Luftstrom durch die Bodenfläche bildet und dessen Dicke und/oder Dichte in Abhängigkeit von dem Abstand von dem Lufteinlass variiert, und/oder
- mit Durchgangslöchern versehen ist, wobei die Anzahl von Durchgangslöchern pro cm² und/oder die Größe der Durchgangslöcher in Abhängigkeit von dem Abstand von dem Luftzufuhreinlass angepasst ist.

8. Lüftungssystem (100) nach einem der vorhergehenden Ansprüche, wobei die Bodenfläche des Doppelbodens eine Schutzzone umfasst, wobei die Schutzzone eine erhöhte Durchlässigkeit in Bezug auf die umgebende Bodenfläche aufweist.

9. Lüftungssystem (100) nach einem der Ansprüche 2 - 8, wobei ein Abschnitt der Deckenfläche eine Durchlässigkeit aufweist, die gleich oder höher als ein Abschnitt der Bodenfläche ist, der gegenüberliegt.

10. Lüftungssystem (100) nach einem der vorhergehenden Ansprüche, das ferner eine Lüftungseinheit (200) umfasst, die die Luftzufuhr und den Luftauslass (2,2') umfasst, wobei
die Luftzufuhr Folgendes umfasst:
einen Außenlufteinlass (201), der zum Empfangen von Luft aus einer Außenumgebung angeordnet ist, und
einen Luftzufuhrventilator (212), der zwischen dem Außenlufteinlass und dem Luftzufuhreinlass (3,3') angeordnet ist, um Luft aus der Außenumgebung zu dem Luftzufuhreinlass des Bodenraums zu drücken, und wobei der Luftauslass (2,2') Folgendes umfasst:
einen Innenlufteinlass (205), der mit dem Deckenraum verbunden ist, um Luft aus dem Deckenraum austreten zu lassen,
einen Innenluftauslass (208), der mit dem Innenlufteinlass verbunden und für das Austreten von Luft in die Außenumgebung angeordnet ist, und
einen Luftabfuhrventilator (214), der zwischen dem Innenlufteinlass (205) und dem Innenluftauslass (205) angeordnet ist, um Luft aus dem Deckenraum zu dem Innenluftauslass (208) zu drücken.

11. Lüftungssystem (100) nach Anspruch 10, wobei die Lüftungseinheit ferner einen Filter (216) umfasst, der zwischen dem Außenlufteinlass (201) und dem Luftzufuhreinlass (3,3') angeordnet und dazu geeignet ist, die einströmende Luft von Verunreinigungen zu filtern.

12. Lüftungssystem (100) nach Anspruch 10 oder 11, wobei die Lüftungseinheit ferner umfasst ein MVHR(mechanische Lüftung mit Wärmerückgewinnung)-System (217), das sowohl mit der Luftzufuhr als auch mit dem Luftauslass (2,2') verbunden und dazu geeignet ist, Wärme von dem Luftauslass an die Luftzufuhr zu übertragen, und einen Bypass (210), der zwischen der Luftzufuhr und dem MVHR-System (217) angeordnet ist und Luft aus der Außenumgebung um das MVHR-System herumleitet, wenn eine Lufttemperatur in dem Luftauslass und/oder in dem Lufteinlass gleich oder höher als eine vorbestimmte Temperatur ist.

13. Lüftungssystem (100) nach einem der Ansprüche 10 bis 12, wobei die Lüftungseinheit eine modulare Einheit ist, die mindestens vier gleich große und geformte Module (201,202,203,204,205,206,207,208), vorzugsweise acht, umfasst.

14. Lüftungssystem (100) nach einem der vorhergehenden Ansprüche, das ferner einen Diffusor umfasst, der sich an dem Lufteinlass (3,3') befindet und dazu geeignet ist, einströmende Luft in mehrere radiale Richtungen in die Bodenraum zu leiten, so dass die einströmende Luft in einer vorbestimmten Verteilung über die Bodenfläche verteilt wird.

15. Verfahren zum Installieren eines Lüftungssystems nach einem der Ansprüche 1 bis 9 in einem Raum, das Folgendes umfasst:
- Bereitstellen eines vertikalen Luftkanals entlang einer Wand, der mit einem Luftzufuhrkanal in der Decke des Raums verbunden ist und sich bis zu dem Boden erstreckt, um einen Lufteinlass zu bilden,
- Bereitstellen einer abgehängten Decke in einem vorbestimmten Abstand von der Decke des Raums, und
- Bereitstellen eines Doppelbodens, der aus einem Trägerrahmen und Bodenfliesen besteht, wobei jede Bodenfliese so codiert ist, dass sie in eine vorbestimmte Position in dem Doppelboden passt, und mit einer vorbestimmten Luftdurchlässigkeit versehen ist, die im Zusammenhang mit dem Abstand des Bodenelements von dem Lufteinlass steht.

16. Verfahren zum Installieren eines Lüftungssystems nach einem der Ansprüche 1 bis 14 in einem Raum, das Folgendes umfasst:
- Bereitstellen von zwei Durchgangsöffnungen in dem Raum zu einer Außenumgebung,
- Bereitstellen einer speziellen Lüftungseinheit in dem Raum und Verbinden der besagten Lüftungseinheit mit einem ersten Einlass mit einer ersten der beiden Durchgangsöffnungen und mit einem zweiten Auslass mit einer zweiten der beiden Durchgangsöffnungen, und Ausdehnen eines ersten Auslasses der Lüftungseinheit bis zu dem Boden des Raums zum Bilden eines Lufteinlasses und Ausdehnen eines zweiten Einlasses der Lüftungseinheit bis zu der Decke des Raums
- Bereitstellen einer abgehängten Decke in einem vorbestimmten Abstand von der Decke des Raums, und
- Bereitstellen eines Doppelbodens, der aus einem Trägerrahmen und Bodenfliesen besteht, wobei jede Bodenfliese so codiert ist, dass sie in eine vorbestimmte Position in dem Doppelboden passt, und mit einer vorbestimmten Luftdurchlässigkeit versehen ist, die im Zusammenhang mit dem Abstand des Bodenelements von dem Lufteinlass steht.

## Revendications

1. Système de ventilation (100) pour la ventilation d'une pièce, comprenant :
un sol surélevé (10), étant soutenu par un cadre de support (12), définissant un espace de sol qui, lorsqu'il est installé, se trouve entre le sol surélevé (10) et un sol de la pièce, le sol surélevé étant perméable à l'air sur une surface de sol, et
une alimentation en air connectée à une entrée d'alimentation en air (3, 3') à l'espace de sol pour fournir de l'air dans l'espace de sol ;
un plafond abaissé (1), définissant un espace de plafond qui, lorsqu'il est installé, se trouve entre le plafond abaissé et un plafond de la pièce, et une sortie d'air (2, 2'), connectée à l'espace de plafond pour évacuer l'air de l'espace de plafond, le plafond abaissé (1) ayant une surface de plafond qui est perméable à l'air ;
la surface de sol perméable étant opposée à la surface de plafond perméable à l'air,
**caractérisé en ce que**
la perméabilité à l'air du sol surélevé varie en fonction de la distance par rapport à l'entrée d'alimentation en air (3, 3') pour former un flux d'air vertical substantiel dans lequel l'air entrant dans la pièce à travers la surface de sol déplace l'air dans la pièce dans la direction verticale et force l'air à sortir à travers la surface de plafond.

2. Système de ventilation (100) selon la revendication 1, où le sol surélevé (10) comprend une pluralité de carreaux de sol (11, 11') avec des trous traversants (19, 19'), où le nombre de trous traversants par cm² et/ou la taille des trous traversants est adapté en fonction de la distance par rapport à l'entrée de l'alimentation en air (3,3').

3. Système de ventilation (100) selon la revendication 2, où chaque carreau de sol (11, 11') est pourvu d'un élément de blocage mobile (16') qui peut être déplacé le long d'une surface du carreau pour bloquer au moins partiellement les trous traversants (19, 19').

4. Système de ventilation (100) selon la revendication 3, où chaque carreau de sol comprend en outre un capteur de pression (18') pour détecter une pression de flux d'air à travers le carreau de sol et un actionneur électrique (21, 22) disposé pour déplacer l'élément de blocage (16') le long de la surface du carreau (11, 11'), et où le système de ventilation comprend en outre un contrôleur qui est une entrée connectée à chaque capteur (18'), pour recevoir une valeur de pression mesurée, et adapté pour déterminer une distribution de pression d'air sur la surface du revêtement de sol, et lequel contrôleur a une sortie connectée à chaque actionneur électrique (21, 22), et adapté pour faire fonctionner chaque actionneur électrique afin de déplacer l'élément de blocage (16') en ajustant la taille des trous traversants (19, 19') d'un carreau de sol respectif en fonction de la valeur de pression reçue du carreau de sol respectif et de la distribution de pression calculée.

5. Système de ventilation (100) selon la revendication 3 ou 4, où chaque carreau de sol (11, 11') est pourvu d'ouvertures traversantes supérieures (19) d'un premier diamètre selon un motif prédéfini et où l'élément de blocage est pourvu d'ouvertures traversantes inférieures (19') selon un motif prédéfini correspondant au motif prédéfini des ouvertures traversantes supérieures, chaque ouverture traversante inférieure ayant un deuxième diamètre qui est plus grand que le premier diamètre ou étant en forme de fente, ayant une longueur qui est plus grande que le premier diamètre et une largeur au moins égale au premier diamètre, les ouvertures traversantes supérieures et inférieures formant les trous traversants du carreau de sol.

6. Système de ventilation (100) selon la revendication 2, où chacun des trous traversants dans chaque carreau de sol est pourvu d'une soupape logarithmique pour ajuster automatiquement la taille de l'ouverture traversante (19, 19') en fonction de la pression d'air.

7. Système de ventilation (100) selon l'une quelconque des revendications précédentes, où le sol surélevé comprend un matériau insonorisant (16) qui, dans la surface du sol
- forme une résistance au flux d'air à travers la surface du sol et varie en épaisseur et/ou en densité en fonction de la distance par rapport à l'entrée d'air ; et/ou
- est pourvu de trous traversants, où le nombre de trous traversants par cm² et/ou la taille des trous traversants est adapté en fonction de la distance par rapport à l'entrée d'alimentation en air.

8. Système de ventilation (100) selon l'une quelconque des revendications précédentes, où la surface de sol du sol surélevé comprend une zone de protection, la zone de protection ayant une perméabilité accrue par rapport à la surface de sol environnante.

9. Système de ventilation (100) selon l'une quelconque des revendications 2 à 8, où une section de la surface du plafond a une perméabilité qui est égale ou supérieure à celle d'une section de la surface de sol qui est opposée.

10. Système de ventilation (100) selon l'une quelconque des revendications précédentes, comprenant en outre une unité de ventilation (200) qui comprend l'alimentation en air et la sortie d'air (2, 2'), où
l'alimentation en air comprend
une entrée d'air extérieur (201), disposée pour recevoir l'air d'un environnement extérieur, et
un ventilateur d'alimentation en air (212), disposé entre l'entrée d'air extérieur et l'entrée d'alimentation en air (3, 3'), pour forcer l'air de l'environnement extérieur jusqu'à l'entrée d'alimentation en air de l'espace de sol, et où la sortie d'air (2, 2') comprend
une entrée d'air intérieur (205), connectée à l'espace de plafond pour évacuer l'air de l'espace de plafond,
une sortie d'air intérieur (208), connectée à l'entrée d'air intérieur et disposée pour évacuer l'air vers l'environnement extérieur, et
un ventilateur d'extraction d'air (214), disposé entre l'entrée d'air intérieur (205) et la sortie d'air intérieur (205), pour forcer l'air de l'espace de plafond jusqu'à la sortie d'air intérieur (208).

11. Système de ventilation (100) selon la revendication 10, où l'unité de ventilation comprend en outre un filtre (216), disposé entre l'entrée d'air extérieur (201) et l'entrée d'alimentation en air (3, 3') et adapté pour filtrer l'air entrant des contaminants.

12. Système de ventilation (100) selon la revendication 10 ou 11, où l'unité de ventilation comprend en outre un système de récupération de chaleur par ventilation mécanique (MVHR) (217), connecté à la fois à l'alimentation en air et à la sortie d'air (2, 2') et adapté pour transférer la chaleur de la sortie d'air à l'alimentation en air, et une dérivation (210) disposée entre l'alimentation en air et le système MVHR (217) et pour dériver l'air de l'environnement extérieur autour du système MVHR lorsqu'une température de l'air dans la sortie d'air et/ou dans l'entrée d'air est égale ou supérieure à une température prédéterminée.

13. Système de ventilation (100) selon l'une quelconque des revendications 10 à 12, où l'unité de ventilation est une unité modulaire comprenant au moins quatre modules de taille et de forme égales (201, 202, 203, 204, 205, 206, 207, 208), de préférence huit.

14. Système de ventilation (100) selon l'une quelconque des revendications précédentes, comprenant en outre un diffuseur, situé à l'entrée d'alimentation en air (3, 3') et adapté pour diriger l'air entrant dans de multiples directions radiales dans l'espace de sol, de sorte que l'air entrant est distribué sur l'espace de sol selon une distribution prédéterminée.

15. Procédé d'installation d'un système de ventilation selon l'une quelconque des revendications 1 à 9 dans une pièce, comprenant
- prévoir un conduit d'air vertical le long d'un mur, connecté à un canal d'alimentation en air dans le plafond de la pièce et prolonger jusqu'au sol pour former une entrée d'air,
- prévoir un plafond abaissé à une distance prédéterminée du plafond de la pièce, et
- prévoir un sol surélevé composé d'un cadre de support et de carreaux de sol, où chaque carreau de sol est codé pour s'adapter à une position prédéterminée dans le sol surélevé et est pourvu d'une perméabilité à l'air prédéterminée qui est liée à la distance de l'élément de sol par rapport à l'entrée d'air.

16. Procédé d'installation d'un système de ventilation selon l'une quelconque des revendications 1 à 14 dans une pièce, comprenant
- prévoir deux ouvertures traversantes dans la pièce, vers un environnement extérieur,
- prévoir une unité de ventilation dédiée dans la pièce et connecter ladite unité de ventilation avec une première entrée à une première des deux ouvertures traversantes et avec une deuxième sortie à une deuxième des deux ouvertures traversantes, et prolonger une première sortie de l'unité de ventilation jusqu'au sol de la pièce pour former une entrée d'air et prolonger une deuxième entrée de l'unité de ventilation jusqu'au plafond de la pièce
- prévoir un plafond abaissé à une distance prédéterminée du plafond de la pièce, et
- prévoir un sol surélevé composé d'un cadre de support et de carreaux de sol, où chaque carreau de sol est codée pour s'adapter à une position prédéterminée dans le sol surélevé et est pourvu d'une perméabilité à l'air prédéterminée qui est liée à la distance de l'élément de sol par rapport à l'entrée d'air.
